# EUROPÄISCHE PATENTSCHRIFT

(11) **EP 3 294 601 B1**
(45) Veröffentlichungstag und Bekanntmachung des Hinweises auf die Patenterteilung: **05.08.2020**
(21) Anmeldenummer: 16726016.5
(22) Anmeldetag: 06.05.2016
(51) Int. Cl.: B61B 3/02, H02K 7/00, H02K 7/06, H02K 7/14

(54) **MECHANISCH-ELEKTRISCHER ANTRIEB**
ELECTROMECHANICAL DRIVE
ENTRAÎNEMENT ÉLECTROMÉCANIQUE

(30) Priorität: 08.05.2015 DE 102015107195; 09.07.2015 DE 102015111124
(43) Veröffentlichungstag der Anmeldung: 21.03.2018
(73) Patentinhaber: AFT Automatisierungs- und Fördertechnik GmbH & Co. KG, 79650 Schopfheim (DE)
(72) Erfinder: JOOS, Dirk, 79650 Schopfheim (DE)
(74) Vertreter: STT Sozietät Thews & Thews
(86) Internationale Anmeldenummer: PCT/EP2016/060147
(87) Internationale Veröffentlichungsnummer: WO 2016/180720

(56) Entgegenhaltungen:
- WO-A1-2014/183191
- DE-A1- 1 808 210
- DE-A1-102005 033 396
- DE-A1-102013 000 852
- US-A1- 2005 012 420
- US-A1- 2009 013 899

## Beschreibung

Die Erfindung bezieht sich auf einen mechanisch-elektrischen Antrieb für ein in einem Stromnetz mit einer Wechselspannung zwischen 350 Volt [V] und 450 Volt [V] betriebenes Förderelement, bestehend aus einem elektrischen Antriebsmotor mit einer Motorwelle und einer Steuerungs- und Regeleinheit für den elektrischen Antriebsmotor.

Es sind bereits gattungsgemäße mechanisch-elektrische Antriebe im Stand der Technik bekannt, bei denen der elektrische Antriebsmotor an eine Getriebeeinheit angeflanscht ist und das Antriebsrad über eine Getriebewelle mit der Motorwelle verbunden ist.

In der DE 66 08 459 U werden Antriebe für eine Elektrohängebahn beschrieben, bei denen dem Gleichstrommotor ein hydrostatisches Getriebe nachgeschaltet ist. Dadurch soll der Nachteil ausgeglichen werden, dass bei drehzahlgeregelten Permanentmagnet-Synchronmotoren die Leistung mit sinkender Drehzahl geringer wird.

Nach der DE 82 19 521 U1 werden Getriebe mit mehreren Funktionen dem elektrischen Antriebsmotor nachgeschaltet.

Die beiden Patentfamilienmitglieder DE 10 2006 049 588 A1 und US 2009/013899 A1 beschreiben gemäß dem Ausführungsbeispiel nach Figur 2 einen induktiven kontaktlosen Antrieb, bei dem über zwei trapezförmige Antriebsrollen eine Zentrierung der Antriebseinheit auf zwei stromleitenden Schienen gewährleitet ist. Der Motor ist wahlweise als Wirbelstrom-, Asynchron-, Synchron- und Reluktanzmotor ausgebildet und vorteilhaft mit einem Getriebe ausgestattet.

Nach der DE 1 808 210A ist ein Antrieb einer Laufkatze für Einschienenhängebahnen mit einer Tragrolle bekannt. Die Achse der Tragrolle wird über ein Schneckengetriebe durch einen Elektromotor angetrieben, der teilweise in ein Gehäusestück eingreift und mit seiner Achse senkrecht zur Achse steht. Dem Schneckengetriebe ist eine Kupplung zugeordnet, die mit einem nach außen reichenden hakenförmigen Kupplungshebel verbunden ist, wodurch ermöglicht wird, die Laufkatze an jeder beliebigen Stelle durch Betätigung des Kupplungshebels stillzusetzen.

Der Erfindung liegt die Aufgabe zugrunde, einen mechanisch-elektrischen Antrieb derart auszubilden und anzuordnen, dass er in bestehende Wechselstromanlagen integrierbar, bei kleinerem Gewicht und kleineren Abmessungen einen besseren Wirkungsgrad aufweist und gleichzeitig auch wartungsärmer ist.

Gelöst wird die Aufgabe erfindungsgemäß dadurch, dass nur ein mit der Motorwelle gekoppeltes Antriebsrad vorgesehen ist, wobei der elektrische Antriebsmotor und das Antriebsrad über einen Träger an einem Förderelement positioniert sind. Nur durch das eine Antriebsrad werden ein Antriebsmoment sowie die gesamte am Träger wirkende Gewichtskraft auf ein stationäres Bauteil übertragen, wobei der elektrische Antriebsmotor mit einem Gehäuse als bürstenloser Permanentmagnet-Synchronmotor ausgebildet ist und das Antriebsrad direkt ohne ein Getriebe übersetzungsfrei mit der Motorwelle gekoppelt ist und die gesamte am Träger wirkende Gewichtskraft über das Gehäuse und die Motorwelle auf das Antriebsrad übertragen wird. Das Antriebsrad treibt das System, mit dem der Permanentmagnet-Synchronmotor verbunden ist, formschlüssig als Zahnrad oder bevorzugt reibschlüssig als Kunststoffrad ausgebildet, über eine entsprechende Schiene an.

Durch einen bürstenlosen Permanentmagnet-Synchronmotor wird erreicht, dass der Permanentmagnet-Synchronmotor die für den Antrieb notwendige Leistungskennlinie erreicht und ohne eine Über- oder Untersetzung über ein Getriebe in vielen Bereichen die notwendigen Drehmomente erreicht. Aufgrund des übersetzungsfreien Antriebs können gleichzeitig auch die Vorteile genutzt werden, den Permanentmagnet-Synchronmotor ohne größeren Aufwand als Generator und damit als Betriebsbremse für das Förderfahrzeug einzusetzen.

Hinsichtlich des Antriebs kann es hierzu auch vorteilhaft sein, wenn das Antriebsrad und die Motorwelle koaxial zu einer Drehachse angeordnet sind, wobei das Antriebsrad mittel- oder unmittelbar mit der Motorwelle gekoppelt ist. Eine solche Kopplung ist durch eine Welle des Antriebsrads oder ein sonstiges Dämpfungselement realisierbar. Dadurch, dass kein Getriebe eingesetzt werden muss, kann die Motorwelle direkt mit dem Antriebsrad gekoppelt werden, sodass beide koaxial laufen. Die Kennlinie des Permanentmagnet-Synchronmotors erlaubt eine direkte und starre Kopplung über eine Welle ohne Dämpfungselement.

Durch eine formschlüssige und übersetzungsfreie Kopplung ohne ein Getriebe kann der Wirkungsgrad des mechanisch-elektrischen Antriebs als Verhältnis von der elektrischen Eingangsleistung zu der an dem Antriebsrad abgegebenen Antriebsleistung auf den Wirkungsgrad des Permanentmagnet-Synchronmotors erhöht werden. Dieser entspricht ca. 98%. Hierdurch wird erreicht, dass der Wirkungsgrad eines zwischen der Motorwelle und dem Antriebsrad angeordneten Elements zur Übertragung des Drehmoments 100% beträgt, wobei der Wirkungsgrad als Verhältnis des vom Antriebsrad aufgenommenen Drehmoments zu dem von der Motorwelle abgegebenen Drehmoments definiert ist.

Hinsichtlich einer vorteilhaften Kennlinie kann es vorgesehen sein, dass der elektrische Antriebsmotor eine Leistung zwischen 100 Watt [W] und 200 Watt [W] oder zwischen 250 Watt [W] und 1000 Watt [W] aufweist. Solche im unteren bis mittleren Leistungsbereich orientierte Permanentmagnet-Synchronmotoren lassen sich besonders einfach auf die gewünschten Kennlinien einstellen.

Ein solcher mechanisch-elektrischer Antrieb ist für ein System bestehend aus einem oder mehreren Förderfahrzeugen oder einem Förderelement mit jeweils einem mechanisch-elektrischen Antrieb vorteilhaft. Ein solches System umfasst beispielsweise Gurtförderer, Zahnriemenförderer, schienenlose Flurförderfahrzeuge oder schienengeführte Flurförderfahrzeuge sowie besonders bevorzugt Elektrohängebahnen.

Für einen flexiblen Austausch ist es vorteilhaft, dass die Elektrohängebahn zur Verwendung innerhalb einer Förderstrecke ausgebildet ist und ein Träger am Förderelement vorgesehen ist, an dem der elektrische Antriebsmotor über sein Gehäuse gelagert ist, wobei die gesamte am Träger wirkende Gewichtskraft über das Gehäuse und die Motorwelle auf das Antriebsrad übertragen wird. Dadurch, dass kein Getriebe eingesetzt wird, wurde die Lagerung des Permanentmagnet-Synchronmotors erfindungsgemäß derart abgeändert, dass sie die Aufgabe des Getriebes übernehmen kann.

Ferner kann es hierzu vorteilhaft sein, wenn an dem Träger mehrere Schleifkontakte für eine Übertragung der Wechselspannung vom Stromnetz an die Steuerungs- und Regeleinheit sowie mehrere Führungsrollen für eine Führung des Trägers in einer Richtung parallel zur Drehachse angeordnet sind. Eine solche Einheit lässt sich einfach austauschen, um beispielsweise das Förderfahrzeug auszutauschen.

Von besonderer Bedeutung kann für die vorliegende Erfindung sein, wenn ein Führungs- oder ein Schienensystem und die Steuerungs- und Regeleinheit für die Elektrohängebahn vorgesehen sind, wobei das Führungs- oder Schienensystem eine Betriebsspannung zwischen 350 Volt [V] und 450 Volt [V] Wechselspannung aufweist. Ein Gurtförderer kann erfindungsgemäß ebenso mit dem vorhandenen Wechselspannungsnetzt betrieben werden wie eine Elektrohängebahn.

Im Zusammenhang mit der erfindungsgemäßen Ausbildung und Anordnung kann es von Vorteil sein, wenn das Führungssystem oder das Schienensystem zumindest einen geschlossenen Förderkreislauf für das Förderfahrzeug bildet. Bei solchen geschlossenen Förderstrecken sind alle Vorteile des erfindungsgemäßen Antriebs einsetzbar.

Vorteilhaft ist es insbesondere, wenn neben dem einzigen Antriebsrad des mechanisch-elektrischen Antriebs maximal eine antriebslose Laufrolle vorgesehen ist und das gesamte Gewicht der Elektrohängebahn über das einzige Antriebsrad und die antriebslose Laufrolle auf das Schienensystem übertragbar ist.

Außerdem kann es vorteilhaft sein, wenn das Schienensystem zumindest eine hängende Schiene aufweist und der elektrische Antriebsmotor in axialer Richtung der Drehachse neben der Schiene positioniert ist. Die erfindungsgemäß kleinere Antriebseinheit erlaubt eine solche Positionierung, die in Kurvenbereichen ausreichend wenig verschwenkt. Eine Positionierung oberhalb der Schiene ist aufgrund der geringen Baugröße nicht notwendig.

Hinsichtlich der Nachrüstung von Bestandsanlagen mit einem Wechselstrommotor als Antriebsmotor ist es vorteilhaft, ein solches erfindungsgemäßes System mit mindestens einem durch einen Wechselstrommotor angetriebenen Förderhilfsfahrzeug zu kombinieren. Das Förderhilfsfahrzeug wird somit in dem gleichen Führungssystem oder Schienensystem betrieben wie das Förderfahrzeug. Für das Förderhilfsfahrzeug ist ohnehin eine Wechselspannung für den Wechselstrommotor notwendig, sodass mit einer entsprechenden Steuerungs- und Regeleinheit das Förderhilfsfahrzeug in der erfindungsgemäßen Anlage fahren kann.

Dadurch, dass der mechanisch-elektrische Antrieb mit einem Permanentmagnet-Synchronmotor ohne eine Getriebeeinheit eine sehr kleine Baugröße aufweist, findet er vorteilhafter Weise Verwendung beim Antrieb von Förderfahrzeugen. Insbesondere jedoch bei Elektrohängebahnen, weil hier gerade in Kurvenbereichen eine geringe Baugröße ein wesentlich geringeres Ausschwenken des mechanisch-elektrischen Antriebs in engen Kurven zum Vorteil hat und dies eine kompakte Bauweise des Schienensystems mit allen Peripheriegeräten ermöglicht.

Weitere Vorteile und Einzelheiten der Erfindung sind in den Patentansprüchen und in der Beschreibung erläutert und in den Figuren dargestellt. Es zeigt:
- Figur 1: eine Prinzipskizze eines mechanisch-elektrischen Antriebs;
- Figur 2: eine Prinzipskizze einer Elektrohängebahn;
- Figur 3: eine Prinzipskizze eines Systems bestehend aus Elektrohängebahnen mit einem Schienensystem;
- Figur 4: eine Seitenansicht eines mechanisch-elektrischen Antriebs;
- Figur 5: eine Ansicht eines mechanisch-elektrischen Antriebs von oben;
- Figur 6: eine perspektivische Ansicht eines mechanisch-elektrischen Antriebs.

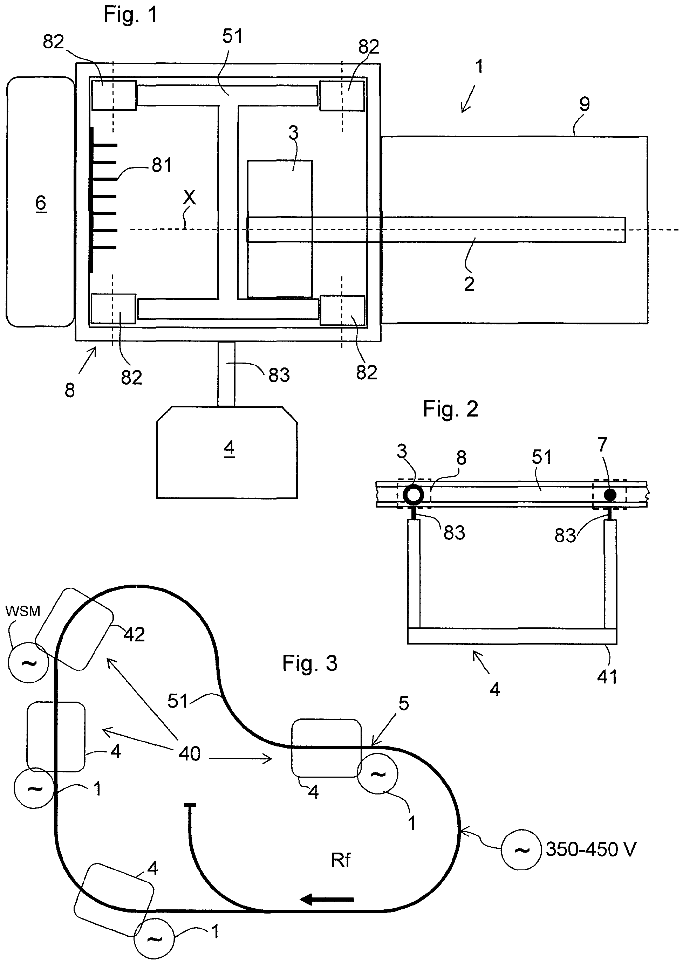

Die Prinzipskizze in Figur 1 zeigt einen mechanisch-elektrischen Antrieb für eine Elektrohängebahn 40 wie sie im Prinzip in Figur 2 dargestellt ist. Der mechanisch-elektrische Antrieb umfasst einen bürstenlosen Permanentmagnet-Synchronmotor als Antriebsmotor 1 mit einem Gehäuse 9 und einer Motorwelle 2, die einseitig aus dem Gehäuse 9 herausgeführt ist. Direkt auf die Motorwelle 2 ist zudem nur ein Antriebsrad 3 aufgesetzt, das übersetzungsfrei form- und oder kraftschlüssig mit der Motorwelle 2 gekoppelt ist. Der mechanisch-elektrische Antrieb umfasst zudem eine Steuerungs- und Regeleinheit 6, über die der Antriebsmotor 1 mit Wechselstrom zur Förderleistung versorgt wird.

Der mechanisch-elektrische Antrieb ist über das Gehäuse 9 des Permanentmagnet-Synchronmotors 1 an einen Träger 8 für das Förderfahrzeug 4 angeflanscht, an dem über eine Aufnahme 83 das Förderfahrzeug 4 der Elektrohängebahn 40 aufgehängt ist. Die an der Aufnahme 83 wirkende Gewichtskraft des Förderfahrzeugs 4 wird über den Träger 8 auf das Gehäuse 9 und vom Gehäuse 9 über die nicht näher dargestellten Lager im Gehäuse 9 des Permanentmagnet-Synchronmotors 1 auf die Motorwelle 2 übertragen. Von der Motorwelle 2 wird die Gewichtskraft über das einzige Antriebsrad 3 auf eine Schiene 51 des Systems der Elektrohängebahn 40 übertragen. Dadurch ist gewährleistet, dass die Motorwelle 2 des Permanentmagnet-Synchronmotors 1 die gesamte an der Aufnahme 83 wirkende Gewichtskraft auf das einzige Antriebsrad 3 überträgt und keine weiteren Lagermittel notwendig sind.

Die Motorwelle 2 rotiert um eine Drehachse X, die rechtwinklig zur Förderrichtung Rf des mechanisch-elektrischen Antriebs und der Elektrohängebahn 40 orientiert ist. Im Träger 8 sind Führungsrollen 82 angeordnet, die den mechanisch-elektrischen Antrieb in Richtung der Drehachse X lagern. Hierzu sind die Führungsrollen 82 um Achsen drehbar gelagert, die rechtwinklig zur Drehachse X und rechtwinklig zur Förderrichtung Rf angeordnet sind.

Das in Figur 2 dargestellte Förderfahrzeug 4 der Elektrohängebahn 40 weist einen Rahmen 41 auf, der in Förderrichtung Rf zusätzlich zu dem einzigen Antriebsrad 3 an einer antriebslosen Laufrolle 7 an dem Schienensystem 5 aufgehängt ist. Nähere Details zur Mechanik der antriebslosen Aufhängung sind nicht dargestellt.

In Figur 3 ist ein Prinzip einer Elektrohängebahn 40 dargestellt, die ein Schienensystem 5 mit einer Schiene 51 aufweist. An der Schiene 51 sind mehrere Förderfahrzeuge 4 und ein Förderhilfsfahrzeug 42 aufgehängt. Die Elektrohängebahn 40 wird mit Wechselstrom mit einer Spannung zwischen 350 Volt [V] und 450 Volt [V] betrieben. Die Förderfahrzeuge 4 werden mit einem Permanentmagnet-Synchronmotor 1 angetrieben. Das Förderhilfsfahrzeug 42 weist einen gängigen Wechselstrommotor (WSM) ohne Permanentmagnet als Antriebsmotor 1 mit einem zwischen dem Antriebsmotor 1 und dem Antriebsrad 3 zwischengeschalteten Getriebe auf. Erfindungsgemäß können somit mechanisch-elektrische Antriebe mit Permanentmagnet-Synchronmotor 1 und mit Wechselstrommotor in demselben System einer Elektrohängebahn 40 integriert werden, das mit Wechselspannung versorgt wird.

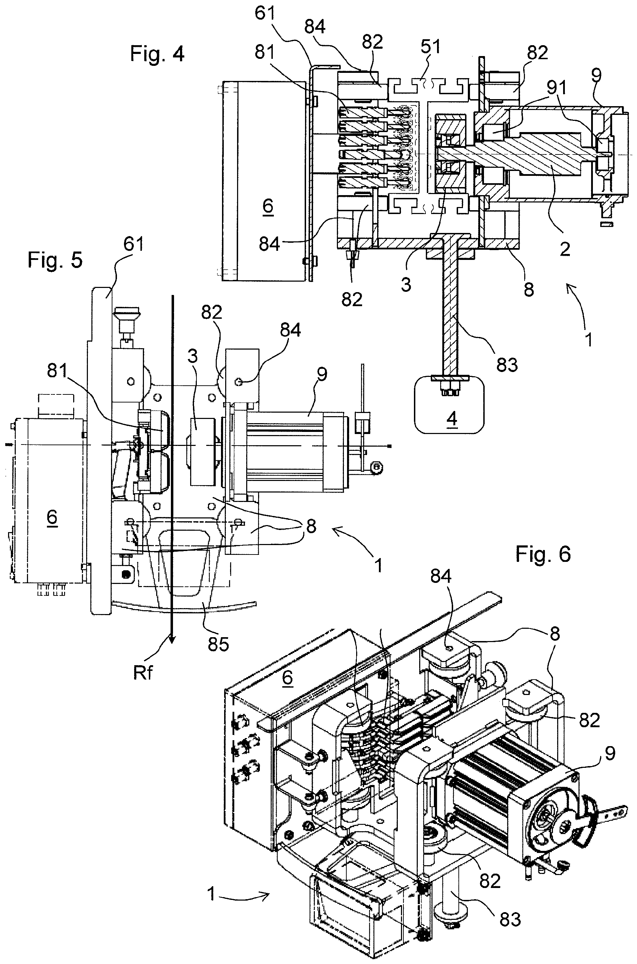

In der Schnittdarstellung gemäß Figur 4 sind Details des mechanisch-elektrischen Antriebs dargestellt. Die für die Stromübertragung notwendigen Schleifkontakte 81 sind auf einer Seite des doppel-T-förmigen Profils der Schiene 51 teilweise in der Schiene 51 angeordnet. Über die Schleifkontakte 81 wird der Wechselstrom in die unmittelbar daneben angeordnete Steuerungs- und Regeleinheit 6 eingespeist, gleichgerichtet und über nicht näher dargestellte Stromleitungen dem Permanentmagnet-Synchronmotor 1 zur Verfügung gestellt. Der Permanentmagnet-Synchronmotor 1 ist in Bezug zur Schiene 51 gegenüberliegend der Steuerungs- und Regeleinheit 6 am Träger 8 angeordnet, wodurch sich in Bezug auf eine vertikal verlaufende Ebene durch die Mitte der Schiene 51 eine ausgeglichene Breite des mechanisch-elektrischen Antriebs ergibt.

Die Motorwelle 2 ist über Zylinderrollenlager 91 im Gehäuse 9 gelagert. Die Führungsrollen 82 sind über Lagerzapfen 84 am Träger 8 befestigt. Die Steuerungs- und Regeleinheit 6 ist über einen Adapter 61 am Träger 8 befestigt.

In Figur 5 ist die Förderrichtung Rf zu erkennen, in der sich der mechanisch-elektrische Antrieb hauptsächlich im Betrieb bewegt. In Förderrichtung Rf ist vor dem Träger 8 eine Stoßstange 85 angeordnet. Eine perspektivische Detailansicht gemäß Figur 6 verdeutlicht den kompakten Aufbau des mechanisch-elektrischen Antriebs.

## Patentansprüche

1. Mechanisch-elektrischer Antrieb für ein in einem Stromnetz mit einer Wechselspannung zwischen 350 Volt [V] und 450 Volt [V] betriebenes Förderelement (4), bestehend aus einem elektrischen Antriebsmotor (1) mit einer Motorwelle (2) und einer Steuerungs- und Regeleinheit (6) für den elektrischen Antriebsmotor (1),
wobei nur ein mit der Motorwelle (2) gekoppeltes Antriebsrad (3) vorgesehen ist, wobei der elektrische Antriebsmotor (1) und das Antriebsrad (3) über einen Träger (8) an einem Förderelement (4) positioniert sind und nur durch das eine Antriebsrad (3) ein Antriebsmoment sowie die gesamte am Träger (8) wirkende Gewichtskraft auf ein stationäres Bauteil (5, 51) übertragen wird, **dadurch gekennzeichnet, dass**
der elektrische Antriebsmotor (1) mit einem Gehäuse (9) als bürstenloser Permanentmagnet-Synchronmotor ausgebildet ist und das Antriebsrad (3) direkt ohne ein Getriebe übersetzungsfrei mit der Motorwelle (2) derart gekoppelt ist, dass die gesamte am Träger (8) wirkende Gewichtskraft über das Gehäuse (9) und die Motorwelle (2) auf das Antriebsrad (3) übertragen wird.

2. Mechanisch-elektrischer Antrieb nach Anspruch 1,
**dadurch gekennzeichnet, dass**
das Antriebsrad (3) und die Motorwelle (2) koaxial zu einer Drehachse (X) angeordnet sind, wobei das Antriebsrad (3) mittel- oder unmittelbar mit der Motorwelle (2) gekoppelt ist.

3. Mechanisch-elektrischer Antrieb nach einem der vorhergehenden Ansprüche,
**dadurch gekennzeichnet, dass**
der elektrische Antriebsmotor (1) eine Leistung zwischen 100 Watt [W] und 200 Watt [W] oder zwischen 250 Watt [W] und 1000 Watt [W] aufweist.

4. System bestehend aus einem oder mehreren Förderelementen 4 mit jeweils einem mechanisch-elektrischen Antrieb nach einem der vorhergehenden Ansprüche, wobei der mechanisch-elektrische Antrieb an dem Förderelement 4 gelagert ist.

5. System nach Anspruch 4,
**dadurch gekennzeichnet, dass**
die Elektrohängebahn (40) zur Verwendung innerhalb einer Förderstrecke ausgebildet ist und ein Träger (8) an der Elektrohängebahn (40) vorgesehen ist, an dem der elektrische Antriebsmotor (1) über sein Gehäuse (9) gelagert ist, wobei die gesamte am Träger (8) wirkende Gewichtskraft über das Gehäuse (9) und die Motorwelle (2) auf das Antriebsrad (3) übertragen wird.

6. System nach Anspruch 4 oder 5,
**dadurch gekennzeichnet, dass**
an dem Träger (8) mehrere Schleifkontakte (81) für eine Übertragung der Wechselspannung vom Stromnetz an die Steuerungs- und Regeleinheit (6) sowie mehrere Führungsrollen (82) für eine Führung des Trägers (8) in einer Richtung parallel zur Drehachse (X) angeordnet sind.

7. System nach Anspruch 6,
**dadurch gekennzeichnet, dass**
als stationäres Bauteil (5, 51) ein Führungs- oder ein Schienensystem und eine Steuerungs- und Regeleinheit (6) für die Elektrohängebahn (40) vorgesehen sind, wobei das Führungs- oder Schienensystem (5) eine Betriebsspannung zwischen 350 Volt [V] und 450 Volt [V] Wechselspannung aufweist.

8. System nach Anspruch 7,
**dadurch gekennzeichnet, dass**
das Führungs- oder ein Schienensystem (5) zumindest einen geschlossenen Förderkreislauf für das Förderfahrzeug (4) bildet.

9. System nach einem der Ansprüche 6 bis 8,
**dadurch gekennzeichnet, dass**
neben dem einzigen Antriebsrad (3) des mechanisch-elektrischen Antriebs maximal eine antriebslose Laufrolle (7) vorgesehen ist und das gesamte Gewicht der Elektrohängebahn (40) über das einzige Antriebsrad (3) und die antriebslose Laufrolle (7) auf das Schienensystem (5) übertragbar ist.

10. System nach Anspruch 9,
**dadurch gekennzeichnet, dass**
das Schienensystem (5) zumindest eine hängende Schiene (51) aufweist und der elektrische Antriebsmotor (1) in axialer Richtung der Drehachse (X) neben der Schiene (51) positioniert ist.

11. Verwendung eines mechanisch-elektrischen Antriebs nach einem der Ansprüche 1 bis 3 in Kombination mit einem Förderfahrzeug (4) oder einer Elektrohängebahn (40) innerhalb einer Förderstrecke, **dadurch gekennzeichnet, dass** der mechanisch-elektrische Antrieb an dem Förderfahrzeug (4) oder an der Elektrohängebahn (40) gelagert ist und an dem das einzige Antriebsrad (3) auf einer stationär gelagerten Schiene (5) oder auf einer Fahrbahn abrollt.

## Claims

1. A mechanical-electrical drive for a conveying element (4) which is operated in a power network with an AC voltage of between 350 volts [V] and 450 volts [V], consisting of an electrical drive motor (1) having a motor shaft (2) and a control and regulating unit (6) for the electrical drive motor (1), wherein
only one drive wheel (3) coupled to the motor shaft (2) is provided, wherein the electrical drive motor (1) and the drive wheel (3) are positioned on a conveying element (4) through a carrier (8), and a drive torque as well as the entire weight force acting on the carrier (8) are only transferred by way of the one drive wheel (3) to a stationary component (5, 51),
**characterized in that**
the electrical drive motor (1) having a housing (9) is configured as a brushless permanent magnet synchronous motor, and the drive wheel (3) is coupled directly free of transmission without a gear to the motor shaft (2) such that the entire weight force acting on the carrier (8) is transferred via the housing (9) and the motor shaft (2) to the drive wheel (3).

2. The mechanical-electrical drive according to Claim 1,
**characterized in that**
the drive wheel (3) and the motor shaft (2) are arranged coaxially to an axis of rotation (X), wherein the drive wheel (3) is coupled indirectly or directly to the motor shaft (2).

3. The mechanical-electrical drive according to any one of the preceding claims,
**characterized in that**
the electrical drive motor (1) has a power rating of between 100 watts [W] and 200 watts [W] or between 250 watts [W] and 1000 watts [W].

4. A system consisting of one or more conveying elements 4, each having a mechanical-electrical drive according to any one of the preceding claims, wherein the mechanical-electrical drive is mounted on the conveying element 4.

5. The system according to Claim 4,
**characterized in that**
the electrical overhead track (40) is configured for use within a conveying path, and a carrier (8) is provided on the electrical overhead track (40), on which the electrical drive motor (1) is mounted via its housing (9), wherein the entire weight force acting on the carrier (8) is transferred via the housing (9) and the motor shaft (2) to the drive wheel (3).

6. The system according to Claim 4 or 5,
**characterized in that**
multiple sliding contacts (81) for transferring the AC voltage from the power network to the control and regulating unit (6) and multiple guide rollers (82) for guiding the carrier (8) in a direction parallel to the axis of rotation (X) are arranged on the carrier (8).

7. The system according to Claim 6,
**characterized in that**
a guidance system or a rail system, as the stationary component (5, 51), and a control and regulating unit (6) are provided for the electrical overhead track (40), wherein the guidance system or rail system (5) has an operating voltage of between 350 volts [V] and 450 volts [V] AC.

8. The system according to Claim 7,
**characterized in that**
the guidance system or a rail system (5) forms at least one closed conveying circuit for the conveying vehicle (4).

9. The system according to any one of Claims 6 to 8,
**characterized in that**
a maximum of one driveless roller (7) is provided in addition to the sole drive wheel (3) of the mechanical-electrical drive, and the entire weight of the electrical overhead track (40) is transferable via the sole drive wheel (3) and the driveless roller (7) to the rail system (5).

10. The system according to Claim 9,
**characterized in that**
the rail system (5) has at least one suspended rail (51), and the electrical drive motor (1) is positioned next to the rail (51) in the axial direction of the axis of rotation (X).

11. Use of a mechanical-electrical drive according to any one of Claims 1 to 3 in combination with a conveying vehicle (4) or an electrical overhead track (40) within a conveying path,
**characterized in that**
the mechanical-electrical drive is mounted on the conveying vehicle (4) or on the electrical overhead track (40), and on which the sole drive wheel (3) rolls on a stationary mounted rail (5) or on a travel track.

## Revendications

1. Entraînement électromécanique d'un élément transporteur (4) actionné dans un réseau électrique avec une tension alternative entre 350 volts [V] et 450 volts [V], comprenant un moteur d'entraînement électrique (1) muni d'un arbre de moteur (2) ainsi que d'une unité de commande et de régulation (6) du moteur d'entraînement électrique (1),
seule une roue d'entraînement (3) couplée à l'arbre de moteur (2) étant prévue, le moteur d'entraînement électrique (1) et la roue d'entraînement (3) étant positionnés sur un élément transporteur (4) par le biais d'un support (8) et un couple d'entraînement ainsi que toute la force exercée par le poids sur le support (8) sont transmis à un composant stationnaire (5, 51) uniquement par ladite roue d'entraînement (3),
**caractérisé en ce que**
le moteur d'entraînement électrique (1) est conçu avec un carter (9) sous la forme d'un moteur synchrone à aimant permanent sans balais et que la roue d'entraînement (3) est couplée directement à l'arbre de moteur (2) sans aucun engrenage ni aucun rapport de transformation de sorte que toute la force exercée par le poids sur le support (8) est transmise à la roue d'entraînement (3) par le biais du carter (9) et de l'arbre de moteur (2).

2. Entraînement électromécanique selon la revendication 1,
**caractérisé en ce que**
la roue d'entraînement (3) et l'arbre de moteur (2) sont disposés coaxialement par rapport à un axe de rotation (X), la roue d'entraînement (3) étant couplée directement ou indirectement à l'arbre de moteur (2).

3. Entraînement électromécanique selon l'une des revendications précédentes,
**caractérisé en ce que**
le moteur d'entraînement électrique (1) présente une puissance entre 100 watts [W] et 200 watts [W] ou entre 250 watts [W] et 1000 watts [W].

4. Système comportant un ou plusieurs éléments transporteurs 4 avec chacun un entraînement électromécanique selon l'une des revendications précédentes, l'entraînement électromécanique étant monté sur l'élément transporteur 4.

5. Système selon la revendication 4,
**caractérisé en ce que**
le convoyeur aérien électrique (40) est conçu pour être utilisé à l'intérieur d'une voie de transport et un support (8) est prévu au niveau du convoyeur aérien électrique (40), sur lequel le moteur d'entraînement électrique (1) est monté par le biais de son carter (9),toute la force exercée par le poids sur le support (8) étant transmise à la roue d'entraînement (3) par le biais du carter (9) et de l'arbre de moteur (2).

6. Système selon la revendication 4 ou 5,
**caractérisé en ce que**
plusieurs contacts à frottement (81) destinés à transmettre la tension alternative du réseau électrique à l'unité de commande et de régulation (6) ainsi que plusieurs galets de guidage (82) destinés à guider le support (8) dans une direction sont disposés sur le support (8) parallèlement à l'axe de rotation (X).

7. Système selon la revendication 6,
**caractérisé en ce qu'**un
système à rails ou de guidage ainsi qu'une unité de commande et de régulation (6) du convoyeur aérien électrique (40) sont prévus pour servir de composant stationnaire (5, 51), le système à rails ou de guidage (5) présentant une tension de service alternative entre 350 volts [V] et 450 volts [V].

8. Système selon la revendication 7,
**caractérisé en ce que**
le système à rails ou de guidage (5) forme au moins un circuit de transport fermé, destiné au véhicule de manutention (4).

9. Système selon l'une quelconques des revendications 6 à 8,
**caractérisé en ce qu'**un
galet de roulement non entraîné (7) au maximum est prévu en plus de l'unique roue d'entraînement (3) de l'entraînement électromécanique et que tout le poids du convoyeur aérien électrique (40) peut être transmis au système à rails (5) par le biais de l'unique roue d'entraînement (3) et du galet de roulement non entraîné (7).

10. Système selon la revendication 9,
**caractérisé en ce que**
le système à rails (5) présente au moins un rail suspendu (51) et le moteur d'entraînement électrique (1) est positionné dans la direction de l'axe de rotation (X) à côté du rail (51).

11. Utilisation d'un entraînement électromécanique selon l'une quelconque des revendications 1 à 3 en combinaison avec un véhicule de manutention (4) ou un convoyeur aérien électrique (40) à l'intérieur d'une voie de transport,
**caractérisé en ce que**
l'entraînement électromécanique est monté sur le véhicule de manutention (4) ou sur le convoyeur aérien électrique (40) et au niveau duquel l'unique roue d'entraînement (3) roule sur un rail à montage stationnaire (5) ou sur une voie de roulement.
